Europäisches Patentamt

European Patent Office

Office européen des brevets

(19)

(11) Publication number: **0 197 010**

**A2**

(12) **EUROPEAN PATENT APPLICATION**

(21) Application number: **86830072.4**

(22) Date of filing: **25.03.86**

(51) Int. Cl.⁴: **A 21 D 13/08**
**A 21 D 2/18, A 21 D 2/16**

(30) Priority: **01.04.85 IT 4003085**

(43) Date of publication of application:
**08.10.86 Bulletin 86/41**

(84) Designated Contracting States:
**AT BE CH DE FR GB LI LU NL SE**

(71) Applicant: **ITALGEL S.P.A.**
**Via Tanara no. 20**
**I-43100 Parma(IT)**

(72) Inventor: **Garbi, Marco**
**Via Indipendenza N. 2**
**S. Ilario d'Enza Parma(IT)**

(74) Representative: **Bonfreschi, Mario**
**Bugnion S.p.A. Viale Trento Trieste, 25**
**I-41100 Modena(IT)**

(54) Process for the preparation of cake-mixes (sponge) to be oven-baked, for storage and consumption at low temperature.

(57) A process is disclosed for the preparation of sponge cake mix, to be oven-baked, then stored and consumed at low temperature; such a process ensures that the sponge produced will stay soft and springy, as well as having an agreeable taste, at temperatures below −12 °C. A mix is prepared from egg, sugar, flour, yeast, fats, emulsifying and moisturizing agents and aromas, and controlled such that added sugar contains monosaccharides and disaccharides in a ratio of 0.30 approx; non-hydrogenated polyunsaturated fats are utilized, consisting of a mixture of 50% sunflower oil and 50% soya bean oil. The mix is then oven-baked to give an end-product especially suitable for the manufacture of ice cream cakes and gateaux.

Croydon Printing Company Ltd.

## Process for the preparation of cake-mixes (sponge) to be oven-baked, for storage and consumption at low temperature.

The invention described herein relates to a process for the preparation of sweet cake-mixes (sponge, in particular) which are oven-baked, then stored and consumed at low temperature.

For some time now the ice cream industries have been moving toward the manufacture of sweets and gateaux in which ice creams in a variety of flavours are packaged together with oven-baked cake, sponge in particular. Such products must be stored at sub-zero temperature, generally between -12 and -18 °C, and this gives rise to the problem of preparing a sponge which will remain soft and springy even at such low temperatures.

To this end, sponge cake mixes for ultimate use by the ice cream industry must contain minimal percentages of free water which, when frozen, crystallizes into ice and thus causes the sponge to stiffen.

In order to ensure that such water is 'bonded' with other ingredients of the mix, recourse is made in general to large proportions of egg, which offers marked emulsifying properties, also, to supersifted flours that permit of better water retention and form a flexible reticular structure, as well as to moisturizing agents such as glycerine, sorbitol and polyalcohols in general, which allow of maintaining

0197010

a given moisture content and thus improve softness of the product at the low temperatures in question. These contrivances are not sufficient, in general, to guarantee embodiment of a product that will stay soft and spongy at low temperature; indeed it is almost invariably the case that sponge cake produced with these methods hardens considerably during cold storage, and that consumption following de-freeze is beset with problems, as well as being disagreeable. In most instances, one has to wait for the sponge to de-freeze completely before consumption is possible. Two different processes are currently adopted by way of which to defeat the problems associated with consumption: on the one hand, soaking the sponge in an alcoholic solution such that it will not freeze, and therefore remain softer; on the other, stepping up the sugar content drastically, such that freezing point of the sponge is lowered.

Both these processes betray serious drawbacks however. The primary effect of soaking sponge cake in alcoholic solutions is to weaken its structure, and cause it to crumble in temperatures of the order in question; in addition, alcohol content in ice cream cakes and sweets is not widely appreciated, and at all events is not particularly suitable, especially where the consumers are young children.

The incorporation of a high percentage of sugar into sponge mix has the effect of bringing about a marked change in the sweetness of the end-product, which is not always agreeable. Whatever the exact percentage, 'too sweet' may work to the product's disadvantage, not only in terms of taste, but also of rejection on the grounds of diet, which is often psychologically motivated.

The object of the invention described herein is to overcome the drawbacks aforementioned by providing a process that permits of preparing a sponge cake for storage and consumption at low temperature which is free of alcoholic solutions; moreover, sweetness of the end-product is controlled and ensured agreeable to the consumer, and hardening of the sponge at low temperature is avoided.

A singular advantage of the process claimed is that it permits of obtaining a sponge cake that will not crumble, even at the low temperatures in question. The stated object and advantage, and other advantages besides, are realized by the process disclosed, which is of the type wherein a mix is prepared from the following ingredients: egg, sugar, flour, yeast, fats, emulsifying and moisturizing agents and aromas, and is characterized in that added sugar contains monosaccharides and disaccharides in a ratio varying between 0.25 and 0.50, and polysaccharides in proportion varying between 0 and 1.5% of the mix overall, by weight; also, in that fats utilized are for the most part of non-hydrogenated polyunsaturated composition.

The different steps of the process will now be described in detail, by way of example, and implying no limitation.

0197010

The process claimed herein envisages preparation of a mix from ingredients conventionally used for mixes of the type, namely: egg, sugar, flour, yeast, fats, emulsifying and moisturizing agents, and aromas. Percentage quantities of the single ingredients will be as per conventional recipes for sponge cake, and will take account of the taste characteristics it is wished to obtain; more precisely, the overall amount of sugar will be kept within limits, i.e. those prescribed for a sponge not intended for freezing, so as not to render the end-product excessively sweet. To ensure that the baked sponge will not harden and crumble when frozen, added sugar will contain monosaccharides and disaccharides in a ratio of between 0.25 and 0.50; moreover, the percentage of polysaccharides therein will be variable between 0 and 1.5% of the mix overall, by weight.

Extensive experiment has demonstrated that it is not so much the overall quantity of added sugar that invests such frozen products with greater softness and springiness, but rather, a correct ratio between the mono-, di- and polysaccharides present in the sugar. It has been found that best results are ensured with a mono- and di- saccharide ratio of 0.30, with polysaccharides accounting for 0.9% of the mix overall, by weight.

It should be pointed out that the percentages thus illustrated relate to added sugar only, irrespective of the percentage of sugar (carbohydrates) present in other substances such as starch or fecula.

Another feature of the process is that it envisages the adoption of a specific type of fats. Sponge mix prepared in accordance with the process will contain non-hydrogenated polyunsaturated fats; such fats are able to give the frozen end-product the right amount of body, without producing a stodgy structure. More precisely, a mixture of fats is adopted that amounts to between 3 and 10% of the mix overall, by weight, and consists of 50% sunflower oil and 50% soya bean oil. The overall quantity of fats is not fundamental to results in the way that the quality of such fats is fundamental; nonetheless, best results have been achieved with an inclusion of 3 to 5% fats overall in the mix.

It should be pointed out that the percentages thus illustrated relate to added fats only, irrespective of the percentage present in other ingredients, such as egg.

Special attention is paid to mixing the ingredients; the sequence of steps adopted will now be described. First, egg and sugar are beaten together to the end of producing a thorough whip, well-aerated. The rest of the ingredients are then added, minus the fats, and stirred briskly in the mixer (speed 3) until the requisite density is achieved, quantifiable between 500 and 550g per litre. The fats are then worked in with the mixer stirring rather slower (speed 1).

The mix is then baked in batches of size and weight to suit packaging requirements, with oven times and temperatures selected accordingly. A disc of between 6 and 8mm thickness would be baked at 190-210 °C for some 6 minutes.

Once baked, the sponge cake can be packaged together with ice cream for consumption as sweets, the end-product being refrigerated (between -12 and -18 °C approx) with no fear whatever of the sponge freezing through or crumbling. The sponge component of such an end-product can be consumed direct from the refrigerator without waiting for de-freeze, thanks to its ability to remain soft and springy.

Laboratory tests were carried out on six different sample mixes, in which the respective proportions of monosaccharides, disaccharides, polysaccharides and fats were as indicated in table 1 attached.

Results of the laboratory tests are shown in table 2 attached, which both indicates the monosaccharide-disaccharide ratio (M : D), and gives the results of penetrometer tests, expressed in mm/min, and organoleptic tests, expressed as a mark between 0 and 10.

The penetrometer test was implemented adopting Guy-Wrass methods, utilizing Rheon III apparatus. Values indicated, in millimetres, reflect the penetration of an aluminium cone into a section of sponge cake of standard thickness.

The organoleptic test was empirical, but meaningful nonetheless; the samples were tasted by different subjects, who were asked to estimate agreeability of each one by way of a 0-to-10 points scale.

Table 3 shows the complete recipes used for sample mixes 4, 5 and 6, which gave the best results. Best results outright were given by sample 6.

In table 3, the disaccharides are admixed as saccharose, whereas glucose syrup and dextrose provide the monosaccharides. In general, use is made of glucose syrups with a high fructose content, normally known as isoglucoses. Polysaccharides are contained in the syrups utilized.

Beside the fact that penetration and organoleptic indexes are extremely satisfying for samples 4, 5 and 6, most especially 6, it will be noted that the sponge cake obtained by way of the process is in no way subject to crumbling at low temperature, a property which enables its utilization not only for the traditional types of ice cream cake where sponge is amalgamated or layered with ice cream, but also for sweets featuring an outer wrapping, or 'turnover' of sponge, which envelops an ice cream filling. Folding of the sponge is made possible, clearly enough, by virtue of its ability to deform without breaking or crumbling when frozen, unlike traditional sponge.

The rheological properties of sponge cake obtained by implementation of the process disclosed therefore render it ideal for manufacturing methods utilizing automatic plant, by which it may be conveyed mechanically, folded, and subjected to other stresses.

Claims

1)  A process for the preparation of sweet cake-mixes
    (sponge) to be oven-baked, then stored and consumed
    at low temperature, of the type wherein a mix is
    prepared from the following ingredients: egg, sugar,
    flour, yeast, fats, emulsifying and moisturizing
    agents and aromas, characterized:
    - in that added sugar contains monosaccharides and
      disaccharides in a ratio varying between 0.25 and
      0.50, and polysaccharides in proportion varying
      between 0 and 1.5% of the mix overall, by weight;
    - and in that fats utilized are for the most part of
      non-hydrogenated polyunsaturated composition.

2)  Process as in claim 1, wherein all the fats utilized
    are non-hydrogenated polyunsaturated fats.

3)  Process as in claim 2, wherein the fats utilized consist of a mixture of 50% sunflower oil and 50% soya
    bean oil, together constituting between 3 and 10% of
    the mix overall, by weight.

4)  Process as in claim 1, wherein added sugar contains
    monosaccharides and disaccharides in a ratio of 0.30
    approximately.

5)   Process as in claim 1, wherein a mix is prepared from the following ingredients: egg, 40% approx; flour, 21% approx; saccharose, 21% approx; glucose syrup, 9% approx; starch/fecula, 3% approx; fats, 3% approx, plus yeast, emulsifying and moisturizing agents and aromas in percentage quantity to make up the mix to 100%.

6)   Process as in claim 1, wherein a mix is prepared from the following ingredients: egg, 37% approx; flour, 20% approx; saccharose, 20% approx; glucose syrup, 4% approx; dextrose, 7% approx; starch/fecula, 4% approx; fats, 5% approx, plus yeast, emulsifying and moisturizing agents and aromas in percentage quantity to make up the mix to 100%.

7)   Process as in claim 1, wherein a mix is prepared from the following ingredients: egg, 38% approx; flour, 20% approx; saccharose, 22% approx; glucose syrup, 11% approx; starch/fecula, 2% approx; fats, 4% approx, plus yeast, emulsifying and moisturizing agents and aromas in percentage quantity to make up the mix to 100%.

8)   Process as in claim 1, wherein a mix is prepared by way of the following steps: beating together of the egg and sugar; addition of the remaining ingredients minus fats; stirring in a mixer at high speed until arrival at the requisite density, quantifiable as 500-550g per litre approx; subsequent addition of fats with the mixer stirring at low speed; baking of the mix thus obtained in an oven, in batches of size and weight to suit requirements.

Table 1

| n° of sample | saccharides | | | fats |
| | mono- | di- | poly- | |
|---|---|---|---|---|
| 1 | 4.5 | 26.0 | 0.7 | 5.4 |
| 2 | 12.6 | 20.0 | 1.8 | 2.5 |
| 3 | 14.1 | 19.0 | 2.0 | 2.3 |
| 4 | 7.8 | 22.0 | 1.1 | 4.0 |
| 5 | 9.8 | 20.0 | 0.3 | 5.0 |
| 6 | 6.3 | 21.0 | 0.9 | 3.0 |

Table 2

| | n° of sample | | | | | |
| | 1 | 2 | 3 | 4 | 5 | 6 |
|---|---|---|---|---|---|---|
| M:D ratio | 0.17 | 0.63 | 0.74 | 0.35 | 0.49 | 0.30 |
| penetration index | 1.34 | 1.85 | 1.92 | 2.01 | 1.98 | 2.05 |
| organoleptic index | 4.0 | 6.5 | 7.0 | 7.5 | 8.0 | 9.0 |

0197010

Table 3

| ingredient | sample 4 % | sample 5 % | sample 6 % |
|------------|------------|------------|------------|
| egg | 38 | 37 | 40 |
| supersifted flour | 20 | 20 | 21 |
| saccharose | 22 | 20 | 21 |
| glucose syrup | 11 | 4 | 9 |
| dextrose | -- | 7 | -- |
| starch/fecula | 2 | 4 | 3 |
| fats | 4 | 5 | 3 |

all recipes contain bakers yeast, emulsifying and moisturizing
agents and aromas in quantity such as to make up the mix to 100%